# EUROPÄISCHE PATENTSCHRIFT

(11) **EP 0 521 169 B1**
(45) Veröffentlichungstag und Bekanntmachung des Hinweises auf die Patenterteilung: **08.11.1995**
(21) Anmeldenummer: 91109405.0
(22) Anmeldetag: 08.06.1991
(51) Int. Cl.: G01F 1/60

(54) **Magnetisch-induktiver Durchflussmesser**
Electromagnetic flowmeter
Débitmètre éléctromagnetique

(43) Veröffentlichungstag der Anmeldung: 07.01.1993
(73) Patentinhaber: Endress + Hauser Flowtec AG, CH-4153 Reinach BL 1 (CH)
(72) Erfinder: Budmiger, Thomas, CH-4107 Ettingen (BL) (CH)
(74) Vertreter: Morstadt, Volker, Dipl.-Ing.

(56) Entgegenhaltungen:
- EP-A- 0 219 725
- US-A- 4 218 915
- PATENT ABSTRACTS OF JAPAN vol. 6, no. 92 (P-119)(970) 29. Mai 1982 & JP-A-57 028 212
- AUTOMATISIERUNGSTECHNISCHE PRAXIS - ATP. Bd. 28, Nr. 6, 1986, MUNCHEN DE Seiten 301 - 306; U.H. ENDRESS: 'INNOVATION IN DER DURCHFLUSSMESSTECHNIK: DAS SPEEDMAG-SYSTEM'
- IRE TRANSACTIONS ON SPACE ELECTRONICS AND TELEMETRY September 1962, Seiten 204 - 209; H. INOSE ET AL.: 'A TELEMETERING SYSTEM BY CODE MODULATION - DELTA-SIGMA MODULATION'
- ELEKTRONIK. 20. September 1985, MUNCHEN DE Seiten 75 - 77; H. PFEIFER: 'ANALOG/ DIGITAL-UMSETZUNG MIT EINEM PULSDICHTEMODULATOR'
- IEEE JOURNAL OF SOLID-STATE CIRCUITS. Bd. SC22, Nr. 2, April 1987, NEW YORK US Seiten 157 - 163; J. ROBERT ET AL.: 'A 16-BIT LOW-VOLTAGE CMOS A/D CONVERTER'
- IEEE JOURNAL OF SOLID-STATE CIRCUITS. Bd. 23, Nr. 3, Juni 1988, NEW YORK US Seiten 736 - 741; J. ROBERT ET AL.: 'A SECOND ORDER HIGH-RESOLUTION INCREMENTAL A/D CONVERTER WITH OFFSET AND CHARGE INJECTION COMPENSATION'

## Beschreibung

Die Erfindung besteht in einem magnetisch-induktiven Durchflußmesser mit einem Rohr, das entweder nichtferromagnetischmetallisch und innen isoliert ist oder aus elektrisch nichtleitendem Material besteht, mit einem Spulensystem zur Erzeugung eines Magnetfelds, dessen Richtung praktisch senkrecht zur Achse des Rohres verläuft und es durchsetzt, mit einer Steuerschaltung eines das Spulensystem und einen Meßwiderstand durchfließenden Stromes, mit je einer Elektrode, die einander gegenüberliegend in der Wand des Rohres angeordnet sind und deren Verbindungslinie praktisch im rechten Winkel zur Rohrachse und zur Magnetfeldrichtung verläuft, und mit einer eingangsseitig an die Elektroden angeschlossenen Meßschaltung, die zwischen ihrem Eingang und ihrem Ausgang folgende Teilschaltungen in der angegebenen Reihenfolge enthält:
Einen an den Elektroden liegenden Differenzverstärker; eine Summierschaltung; einen Analog/Digital-Wandler, der eine Referenzspannung fortlaufend, also mit ihrem jeweils vorhandenen Momentanwert, in die Wandlung einbezieht und dem die Spannung am Meßwiderstand als diese Referenzspannung zugeführt ist; einen Mikroprozessor, der ein der Summierschaltung zugeführtes Kompensationssignal erzeugt und eine Ablaufsteuerung enthält; sowie eine Anzeige-Einheit.

In der Zeitschrift "msr", 1988, Seiten 194 bis 196 ist anhand eines marktgängigen Gerätes vom Typ DISCOMAG ein magnetischinduktiver Durchflußmesser beschrieben mit einem Rohr, das entweder nichtferromagnetisch-metallisch und innen isoliert ist oder aus elektrisch nichtleitendem Material besteht, mit einem Spulensystem zur Erzeugung eines Magnetfelds, dessen Richtung praktisch senkrecht zur Achse des Rohres verläuft und es durchsetzt, mit einer Steuerschaltung eines das Spulensystem und einen Meßwiderstand durchfließenden Stromes, mit je einer Elektrode, die einander gegenüberliegend in der Wand des Rohres angeordnet sind und deren Verbindungslinie praktisch im rechten Winkel zur Rohrachse und zur Magnetfeldrichtung verläuft, und mit einer eingangsseitig an die Elektroden angeschlossenen Meßschaltung, die zwischen ihrem Eingang und ihrem Ausgang folgende Teilschaltungen in der angegebenen Reihenfolge enthält: einen an den Elektroden liegenden Differenzverstärker, eine Summierschaltung, einen Analog/Digital-Wandler, einen Mikroprozessor, der ein der Summierschaltung zugeführtes Kompensationssignal erzeugt und eine Ablaufsteuerung enthält, sowie eine Anzeige-Einheit.

Der Erfindung liegen die im folgenden ausführlich geschilderten Probleme zugrunde. Bei dem in der genannten Zeitschrift beschriebenen magnetisch-induktiven Durchflußmesser ist der Analog/Digital-Wandler ein Dual-Slope-Analog/Digital-Wandler, wie er z.B. bei Digital-Voltmetern üblich ist. Derartige Analog/Digital-Wandler beziehen in die Wandlung lediglich denjenigen Referenzspannungswert ein, der zu Beginn einer jeden Meßperiode anliegt. Sie stützen die Wandlung also auf einen während jeder Wandlungsperiode konstanten Referenzspannungswert. Bei magnetisch-induktiven Durchflußmessern der vorbeschriebenen Art ist das der dann gerade am Meßwiderstand vorhandene Spannungswert. Üblicherweise wird das Festhalten dieses Spannungswerts mittels einer Sample/Hold-Stufe erreicht.

Da bei der vorbeschriebenen Anordnung der Spulenstrom von einer Stromregelschaltung konstant gehalten wird, war man bisher der Ansicht, daß dieses einmalige Abtasten der Referenzspannung während jeder Wandlungsperiode genügt, da ja der Spulenstrom als absolut konstant vorausgesetzt werden kann, und somit Dual/Slope-Analog/Digital-Wandler ohne weiteres verwendbar sind. Wie Untersuchungen des Erfinders jedoch gezeigt haben, ist diese Voraussetzung zu hinterfragen, wenn hochpräzise magnetischinduktive Durchflußmesser realisiert werden müssen. Es kann nämlich nicht immer ausgeschlossen werden, daß sich der Spulenstrom während der Meßperiode aufgrund von Störungen in der Stromregelung ändert. Bei nicht vorgesehener Regelung ändert sich der Spulenstrom mit den Änderungen der Versorgungsspannung sowieso. Da die Meßspannung aufgrund des Faraday'schen Induktionsgesetzes aber immer streng proportional zum Momentanwert des Spulenstroms ist, bezieht der Dual/Slope-Analog/Digital-Wandler die Meßspannung auf eine Referenz, zu der die Meßspannung gerade nicht mehr proportional ist. Dies führt zu Meß- und Genauigkeitsfehlern, die ihrerseits proportional zur Differenz zwischen dem abgetasteten Wert der Referenzspannung und dem Momentanwert des Spulenstroms sind.

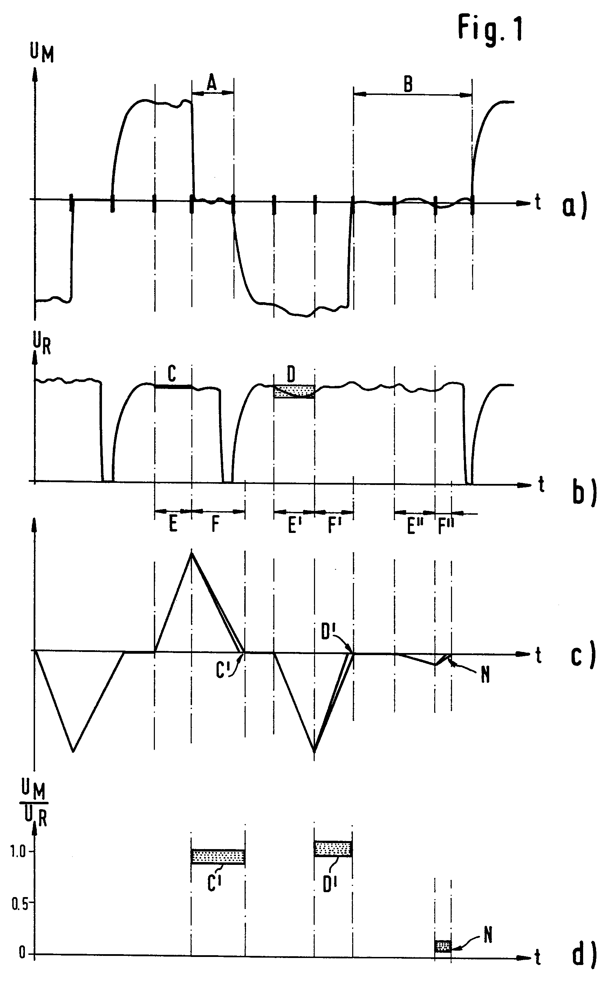

Diese Zusammenhänge werden anhand der Fig. 1 näher erläutert, die verschiedene Zeitdiagramme des Meßablaufs bei vorbeschriebenen magnetisch-induktiven Durchflußmessern zeigt. In Fig. 1a ist über der Zeitachse t der Verlauf der an den Elektroden abgegriffenen Spannung, im folgenden als Meßspannung U_{M} bezeichnet, gezeigt. Der Abstand zwischen den stark gezeichneten Querstrichen auf der Zeitachse gibt die Periodendauer eines Grundtaktes an, auf den bezogen und durch den synchronisiert die gesamte Elektronik arbeitet.

In Fig. 1a sind der Einfachheit halber direkt hintereinander an sich zwei verschiedene Arten der Störspannungskompensation angedeutet, von denen jeweils eine bei einem bestimmten Gerätetyp angewendet wird. Die eine Art, wie sie in der US-A 42 10 022 beschrieben ist, wird während der mit A bezeichneten Periodendauer des Grundtaktes vorgenommen. Die andere Art, wie sie in der US-A 47 04 908 beschrieben ist, erfolgt während der mit B bezeichneten drei Periodendauern des Grundtaktes, wobei während deren mittlerer eine Nullpunktmessung stattfindet.

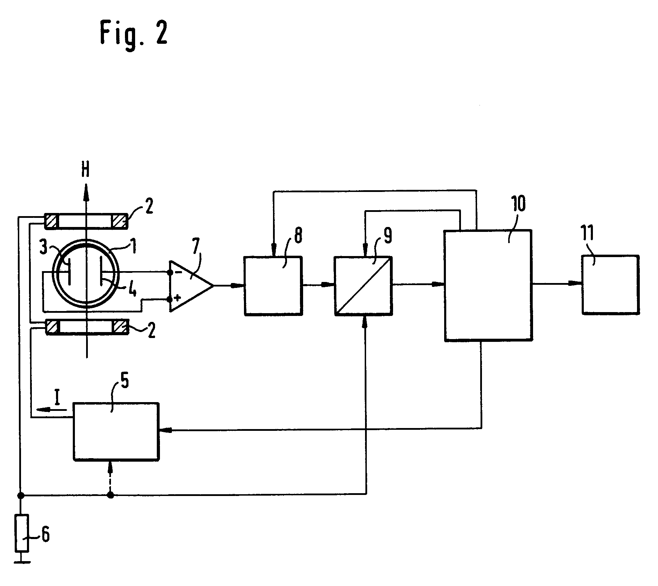

Die Meßspannung ist in Fig. 1a abwechselnd positiv oder negativ, dargestellt, da, wie bei magnetisch-induktiven Durchflußmessern allgemein üblich, die Magnetfeldrichtung durch auf die Spulen bezogene Polaritätsumkehr des Spulenstroms I (vgl. Fig. 2) periodisch umgekehrt wird.

In Fig. 1b ist der zeitliche Verlauf der Referenzspannung U_{R} zu sehen, also auch der qualitative Verlauf des Spulenstroms I. Dieser ist in Fig. 1b für beide Stromrichtungen positiv gezeichnet, was für eine sogenannte "H"-Schaltung, deren Gesamtstrom über den Meßwiderstand immer in derselben Richtung zum Schaltungsnullpunkt fließt, gilt.

Eine solche "H"-Schaltung ist in der genannten US-A 42 10 022, Fig. 2 oder in der US-A 44 10 926, Fig. 3 offenbart. Die "H"-Schaltung ist eine Brückenschaltung mit je einem elektronischen oder mechanischen Schalter in den vier Brückenzweigen und mit dem Spulensystem in der einen Brückendiagonalen, wobei zur Stromrichtungsumkehr im Spulensystem entweder nur die einen oder die anderen beiden dieser Diagonalen gegenüberliegenden Schalter stromleitend gesteuert sind. Der Meßwiderstand liegt dabei zwischen einem Eckpunkt der anderen Brückendiagonalen und dem Schaltungsnullpunkt.

Bei der sogenannten "T"-Schaltung", wie sie in der genannten US-A 44 10 926, Fig. 4 gezeigt ist, liegt das eine Ende des Spulensystem über den Meßwiderstand am Schaltungsnullpunkt und dessen anderes Ende über je einen elektronischen oder mechanischen Schalter am gegenüber dem Schaltungsnullpunkt positiven bzw. am gegenüber dem Schaltungsnullpunkt negativen Pol einer Gleichspannungsquelle, wobei zur Stromrichtungsumkehr im Spulensystem nur entweder der eine oder der andere Schalter leitend gesteuert ist. Der Strom im Meßwiderstand wechselt somit im Gegensatz zur "H"-Schaltung seine Richtung. Bei einer "T"-Schaltung würde daher in Fig. 1b die Referenzspannung U_{R} wie in Fig. 1a die Meßspannung U_{M} abwechselnd positiv oder negativ sein.

In Fig. 1b ist gezeigt, daß die Referenzspannung aufgrund nichtkonstanten Spulenstroms nicht waagrecht, sondern schwankend verläuft. Der jeweilige Verlauf während der Periodendauern E von Fig. 1c ist durch die punktierten Rechtecke bei C und D hervorgehoben.

Die Fig. 1c zeigt in analoger Darstellung das in Abhängigkeit von der Meßspannung während einer fest vorgegebenen Zeit, nämlich einer Periodendauer E des Grundtakts, erfolgende Aufintegrieren und das anschließende mit vorgegebener konstanter Steilheit erfolgende Abintegrieren durch den Dual-Slope-Analog/Digital-Wandler. Das von ihm am Ende des Abintegrierens erzeugte Digitalsignal ist proportional der Abintegrationszeit F, F', F''.

Aufgrund des nichtkonstanten Verlaufs der Meßspannung und der Wahl des zu Beginn des Aufintegrierens gerade vorhandenen Wertes der Referenzspannung für die gesamte Dauer von Auf- und Abintegrieren ergibt sich somit ein mit C' bzw. D' bezeichneter Meßfehler.

In Fig. 1c ist ferner angedeutet, daß während der mittleren der drei Periodendauern B des Grundtakts durch den Dual/Slope-Analog/Digital-Wandler auch eine Nullpunktmessung, wie sie in der genannten US-A 47 04 908 beschrieben ist, vorgenommen wird. Auch hier ergibt sich ein auf den gleichen Ursachen beruhender Meßfehler N.

Dieser Meßfehler ist auch aus Fig. 1d ersichtlich, in der der Quotient U_{M}/U_{R} aus Meßspannung und Referenzspannung dargestellt ist. In dem der Fig. 1 zugrundegelegten konkreten Fall entspricht der jeweilige obere Wert des punktierten Rechtecks von Fig. 1d dem korrekten Meßwert, während der jeweilige untere Wert dem meßfehlerbehafteten Wert C', D', N nach Fig. 1c entspricht.

Die vorbeschriebene Art der lediglich auf einen Abtastwert der Referenzspannung bezogenen Dual/Slope-Analog/Digital-Wandlung ist daher unzureichend, zumal damit selbst bei steilem Anstieg des Spulenstroms - was im übrigen entsprechende Schaltungsmaßnahmen erfordert - nur maximal ca. 50% der Periodendauer der Meßspannung erfaßt werden können.

Hinzu kommt, daß bei praktisch allen handelsüblichen magnetischinduktiven Durchflußmessern eine Kompensation der an den Elektroden aufgrund von elektrochemischen Vorgängen auftretenden Störspannungen vorgenommen werden muß, die anschließend an die Meßperiode erfolgt, wie dies z.B. in der US-A 42 10 022 oder der US-A 47 04 908 beschrieben ist. Zusammen mit einem Dual/Slope-Analog/Digital-Wandler bedingt dies eine Verlängerung der Meßperiode und damit weitere Störeinfluß-Möglichkeiten, oder es müssen zwei Integratoren vorgesehen werden, deren einer der Messung des Nullpunkts dient und deren anderer das Meßsignal erfaßt. Letzteres erfordert jedoch eine ganze Reihe zusätzlicher mechanischer und/oder elektronischer Bauelemente.

Eine Aufgabe der Erfindung besteht daher darin, die Analog/Digital-Wandlung auf andere und genauere Art und Weise zu realisieren. Dies wird u.a. durch die beanspruchte Verwendung eines Analog/Digital-Wandlers, der eine Referenzspannung laufend in die Wandlung einbezieht, ermöglicht. Daher erfolgt die Analog/Digital-Wandlung streng proportional zum momentanen Spulenstrom. Bevorzugt handelt es sich bei derartigen Analog/Digital-Wandlern um Switched-Capacitor- oder um Delta-Sigma-Analog/Digital-Wandler.

Beide Arten von Analog/Digital-Wandlern sind an sich in der Literatur beschrieben, vgl. für Switched-Capacitor-Analog/Digital-Wandler die zeitschrift "IEEE Journal of Solid-State Circuits", 1987, Seiten 157 bis 163, und 1988, Seiten 736 bis 741, oder für den Delta-Sigma-Analog/Digital-Wandler die Zeitschrift "IRE Trans. on Space Electronics and Telemetry", 1962, Seiten 204 bis 209, worin die Delta-Sigma-Modulation für das Gebiet der Telemetrie erläutert wird, also für die Übertragung von Meßwerten über große Entfernungen. In jüngerer Vergangenheit wurde auch die besondere Eignung von Delta-Sigma-Analog/Digital-Wandlern für die Digitalisierung von Audiosignalen in Rundfunk- und Fernseh-Geräten beschrieben, vgl. die Zeitschrift "Elektronik", 20.09.1985, Seiten 75 bis 77.

Es ist überraschend und nicht zu erwarten gewesen, daß, wie der Erfinder erkannt hat, die sehr niederfrequenten Elektrodenspannungen von magnetisch-induktiven Durchflußmessern durch diese an sich für andere Verwendungen, insb. Fernmessungen oder Audiosignale, beschriebenen Analog/Digital-Wandler mit sehr hoher Genauigkeit erfaßt werden können.

Ein Vorteil der Erfindung besteht darin, daß auch extrem instabile Elektrodenspannungen gemessen werden können, da die Abtastfrequenz des Analog/Digital-Wandlers entsprechend hoch gewählt werden kann und etwa 80% bis 90% der Periodendauer der Meßspannung erfaßt werden können.

Die Erfindung wird nun anhand eines Ausführungsbeispiels unter Bezugnahme auf die weiteren Figuren der Zeichnung näher erläutert, in der gleiche Teile mit denselben Bezugszeichen versehen sind.
- Fig. 2: zeigt schematisch nach Art eines Blockschaltbilds den elektronischen Teil eines magnetisch-induktiven Durchflußmessers, und
- Fig. 3: zeigt in Anlehnung an die Diagramme der Fig. 1 verschiedene Zeitdiagramme zur Erläuterung der Wirkungsweise von magnetisch-induktiven Durchfluß messern entsprechend der Erfindung.

Im schematischen Blockschaltbild der Fig. 2 ist ein Rohr 1 eines magnetisch-induktiven Durchflußmessers zu sehen, das entweder aus einem nichtferromagnetischen Metall, z.B. nichtrostendem Stahl, besteht und innen isoliert ist, z.B. durch Beschichtung mit einem Kunststoff, wie Polytetrafluorethylen, Polyvinylidenfluorid oder Perfluoralkoxy, oder mit Weich- oder mit Hartgummi. Das Rohr 1 kann aber auch aus elektrisch nichtleitendem Material bestehen, also aus Isoliermaterial, z.B. aus Keramik, insb. Al₂O₃-Keramik, bestehen. Im Betrieb fließt durch das Rohr 1 in einer Richtung senkrecht zur Zeichenebene eine elektrisch leitfähige Flüssigkeit, deren Volumendurchfluß gemessen werden soll.

Ein Spulensystem 2, das in Fig. 2 aus einer oberhalb und einer unterhalb des Rohres liegenden Spule besteht, die elektrisch in Reihe geschaltet sind,erzeugt bei Fließenlassen eines Stromes I ein zu der Längsachse des Rohres 1 senkrechtes und es durchsetzendes Magnetfeld H. Die Stärke und die Richtung dieses Stromes werden von einer Steuerschaltung 5 bestimmt. Der Strom I fließt auch über einen Meßwiderstand 6,der mit seinem einen Ende am Schaltungsnullpunkt liegt. Dadurch erzeugt der Strom I an ihm eine Referenzspannung U_{R}.

Galvanische oder kapazitive Elektroden 3, 4 sind in der Rohrwand einander gegenüber angeordnet, wobei galvanische Elektroden Flüssigkeitskontakt, kapazitive dagegen keinen haben. Die Verbindungslinie der Elektroden ist senkrecht zur Rohrachse und zur Magnetfeldrichtung. An den Elektroden 3, 4 entsteht aufgrund des Faraday'schen Induktionsgesetzes eine elektrische Spannung, die Meßspannung U_{M}, die dem Volumendurchfluß proportional ist. Der Meßspannung ist meist eine Störspannung überlagert, die ihre Ursache in unterschiedlichen elektrochemischen Gleichgewichtspotentialen hat und im Laufe der Zeit Werte erreichen kann, die ein Vielfaches der Meßspannung betragen.

Eine Steuerschaltung 5 steuert und regelt gegebenenfalls den Spulenstrom I in Abhängigkeit eines von einem Mikroprozessor 10 stammenden Signals u.a. so, daß die Stromrichtung, z.B. wie in Fig. 1 gezeigt, bezogen auf den Grundtakt periodisch umgepolt wird. Im Falle einer vorgesehenen Stromregelung ist die Referenzspannung U_{R} auch der Steuerschaltung 5 zugeführt, was in Fig. 2 durch die gestrichelte Leitung angedeutet ist.

Je eine der Elektroden 3, 4 ist mit dem einen bzw. dem anderen Eingang eines Differenzverstärkers 7 verbunden, der nur eine kleine Verstärkung aufzuweisen braucht, so daß er auch durch große Störspannungen nicht übersteuert werden kann. Der Ausgang des Differenzverstärkers 7 liegt am einen Eingang einer Summierschaltung 8, deren anderem Eingang vom Mikroprozessor 10 aus in vorbeschriebener Weise ein Kompensationssignal zugeführt ist, vgl. die genannten US-A 42 10 022 und 47 04 908.

Am Ausgang der Summierschaltung 8 liegt der Signaleingang eines derartigen solchen Analog/Digital-Wandlers 9, daß er eine Referenzspannung fortlaufend, also mit ihrem jeweils vorhandenen Momentanwert, in die Wandlung einbezieht. Hierzu ist dem Analog/Digital-Wandler die Spannung am Meßwiderstand 6 als diese Referenzspannung U_{R} zugeführt. Das zur Analog/Digital-Wandlung erforderliche Taktsignal ist dem Analog/Digital-Wandler 9 vom Mikroprozessor 10 aus zugeführt.

Der Mikroprozessor 10 enthält u.a. eine Ablaufsteuerung für das auf den erwähnten Grundtakt bezogene Ein- und Ausschalten der der Stromrichtungsumkehr dienenden Schalter in der Steuerschaltung 5 sowie für die Taktung des Analog/Digital-Wandlers 9 und weitere gegebenfalls erforderliche oder vorgesehene Teilschaltungen. Der Mikroprozessor 10 berechnet ferner aus dem digitalisierten Ausgangssignal der Summierschaltung 8 ein Signal, das den gemessenen Volumendurchfluß repräsentiert und das einer Anzeige-Einheit 11 zugeführt ist.

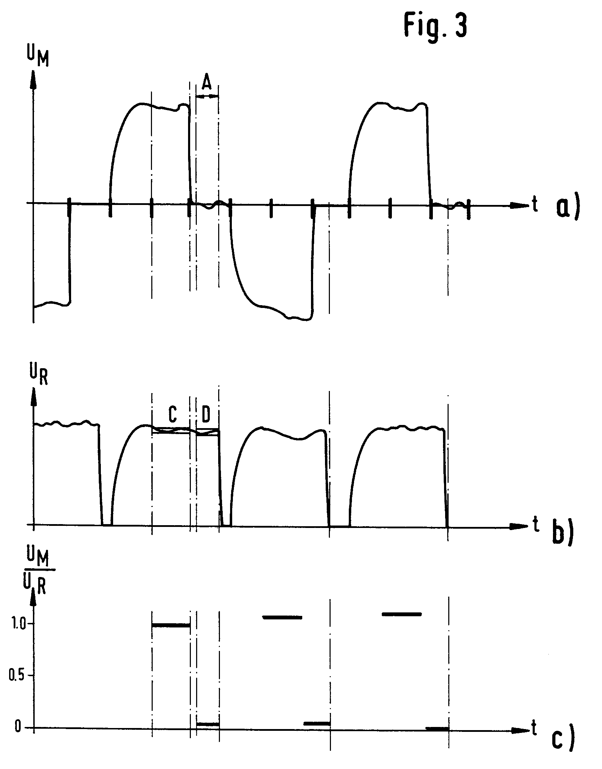

Die Fig. 3 zeigt in Anlehnung an die Diagramme der Fig. 1 verschiedene Zeitdiagramme zur Erläuterung der Wirkungsweise von magnetisch-induktiven Durchflußmessern entsprechend der Erfindung. Dabei entsprechen die Fig. 3a und 3b den Fig. 1a und 1b, so daß auf deren obige Erläuterung verwiesen wird. Allerdings ist die Kompensationsphase B nach Fig. 1a weggelassen, so daß die dort deswegen verlängerte Meßdauer nicht angewendet zu werden braucht. Ferner fehlt eine der Fig. 1c zugeordnete Teilfigur., so daß sich Fig. 1d und 3c entsprechen.

Die Diagramme der Fig. 3a und 3b zeigen wieder die während der Meßperioden C, D auftretenden Schwankungen des Spulenstroms und die daraus resultierenden proportionalen Schwankungen der Meßspannung. Die Fig. 3c zeigt nun, daß der Quotient U_{M}/U_{R} keinen Fehler mehr enthält, sondern den exakten Meßwert wiedergibt.

## Patentansprüche

1. Magnetisch-induktiver Durchflußmesser
- mit einem Rohr (1), das entweder nichtferromagnetischmetallisch und innen isoliert ist oder aus elektrisch nichtleitendem Material besteht,
- mit einem Spulensystem (2) zur Erzeugung eines Magnetfeldes (H), dessen Richtung praktisch senkrecht zur Achse des Rohres (1) verläuft und es durchsetzt,
- mit einer Steuerschaltung (5) eines das Spulensystem (2) und einen Meßwiderstand (6) durchfließenden Stromes (I),
- mit je einer Elektrode (3, 4), die einander gegenüberliegend in der Wand des Rohres (1) angeordnet sind und deren Verbindungslinie praktisch im rechten Winkel zur Rohrachse und zur Magnetfeldrichtung verläuft, und
- mit einer eingangsseitig an die Elektroden (3, 4) angeschlossenen Meßschaltung, die zwischen ihrem Eingang und ihrem Ausgang folgende Teilschaltungen in der angegebenen Reihenfolge enthält:
-- einen an den Elektroden (3, 4) liegenden Differenzverstärker (7),
-- eine Summierschaltung (8),
-- einen Analog/Digital-Wandler (9), der eine Referenzspannung (U_{R}) fortlaufend, also mit ihrem jeweils vorhandenen Momentanwert, in die Wandlung einbezieht und dem die Spannung am Meßwiderstand (6) als diese Referenzspannung zugeführt ist,
-- einen Mikroprozessor (10), der ein der Summierschaltung zugeführtes Kompensationssignal erzeugt und eine Ablaufsteuerung enthält, sowie
-- eine Anzeige-Einheit (11).

2. Magnetisch-induktiver Durchflußmesser nach Anspruch 1 mit einem Switched-Capacitor- oder einem Delta-Sigma-Analog/Digital-Wandler.

## Claims

1. A magnetic flowmeter comprising
- a pipe (1) made either of nonferromagnetic metal and insulated inside or of electrically nonconductive material,
- a coil system (2) for producing a magnetic field (H) whose direction is practically perpendicular to the axis of the pipe (1) and which cuts the pipe,
- a control circuit (5) for controlling a current flowing through the coil system (2) and through a measuring resistor (6),
- two electrodes (3, 4) which are mounted opposite each other in the wall of the pipe (1) and whose connecting line is practically perpendicular to the pipe axis and to the direction of the magnetic field, and
- a measuring circuit having its input connected to the electrodes (3, 4) and containing, between its input and its output, the following subcircuits in the order given:
-- a differential amplifier (7) connected to the electrodes (3, 4),
-- a summer (8),
-- an analog-to-digital converter (9) which incorporates a reference voltage (U_{R}) continuously, i.e., with its respective instantaneous value, into the conversion, and to which the voltage across the measuring resistor (6) is applied as said reference voltage,
-- a microprocessor (10) generating a compensation signal for the summer and including a sequencer, and
-- a display unit (11).

2. A magnetic flowmeter as claimed in claim 1, comprising a switched-capacitor or delta-sigma analog-to-digital converter.

## Revendications

1. Débitmètre électromagnétique comprenant
- un tube (1) qui soit est non-ferromagnétique, soit est isolé de l'intérieur ou est fabriqué à partir d'un matériau non électro-conducteur,
- un système de bobines (2) destiné à la production d'un champ magnétique (H) dont la direction est pratiquement perpendiculaire à l'axe du tube (1) et le traverse,
- un commutateur de commande (5) d'un courant (I) traversant le système de bobines (2) et une résistance de mesure (6),
- deux électrodes (3, 4) disposées l'une en face de l'autre sur la paroi du tube (1) et dont la ligne de jonction forme pratiquement un angle droit avec l'axe du tube et la direction du champ magnétique, et
- une connexion de mesure raccordée aux électrodes (3, 4) côté entrée et contenant entre son entrée et sa sortie les connexions partielles suivantes dans un ordre déterminé :
-- un amplificateur différenciateur (7) disposé sur les électrodes (3, 4),
-- une connexion d'addition (8),
-- un convertisseur analogique-numérique (9) intégrant en continu une tension de référence (U_{R}) dans le conversion, à savoir avec sa valeur instantanée effective respective et auquel est transmise la tension sur la résistance de précision (6) comme tension de référence,
-- un microprocesseur (10) produisant un signal de compensation transmis à la connexion d'addition et contenant une commande séquentielle, ainsi que
-- une unité d'affichage (11).

2. Débitmètre électromagnétique selon la revendication 1 pourvu d'un condensateur de commutation ou d'un convertisseur analogique-numérique Delta-Sigma.
